# EUROPEAN PATENT SPECIFICATION

(11) **EP 0 667 583 B1**
(45) Date of publication and mention of the grant of the patent: **17.03.1999**
(21) Application number: 94120916.5
(22) Date of filing: 29.12.1994
(51) Int. Cl.: G06F 17/14

(54) **Two-dimensional inverse discrete cosine transform system**
System für die zweidimensionale inverse diskrete Cosinus-Transformation
Système de calcul d'une transformée en cosinus discret bidimensionnelle

(30) Priority: 18.01.1994 KR 9400751
(43) Date of publication of application: 16.08.1995
(73) Proprietor: DAEWOO ELECTRONICS CO., LTD, Jung-Gu, Seoul 100-095 (KR)
(72) Inventor: Kim, Seong-Jeong, Songpa-Ku, Seoul (KR)
(74) Representative: Turi, Michael, Dipl.-Phys.

(56) References cited:
- EP-A- 0 366 976
- EP-A- 0 566 184
- EP-A- 0 572 766
- WO-A-88/07725
- PROCEEDINGS OF THE 1990 IEEE INTERNATIONAL SYMPOSIUM ON CIRCUITS AND SYSTEMS, IEEE PRESS NEW YORK US, vol. 1/4, 1 May 1990 - 3 May 1990 NEW ORLEANS, US, pages 77-80, XP 000166727 P.DUHAMEL ET AL 'A DCT chip based on a new structured and computationally efficient DCT algorithm'

## Description

### Field of the Invention

The present invention relates to a two-dimensional inverse discrete cosine transform(IDCT) apparatus for use in a digital image processing system; and, more particularly, to an IDCT apparatus capable of processing a transformed video signal consisting of blocks of video data and various time gaps intervening therebetween.

### Description of the Prior Art

As is well known, transmission of digitized video signals can deliver video images of a much higher quality than the transmission of analog signals. When an image signal comprising a sequence of image "frames" is expressed in a digital form, a substantial amount of data is generated for transmission, especially in the case of a high definition television system. Since, however, the available frequency bandwidth of a conventional transmission channel is limited, in order to transmit the substantial amounts of digital data through the limited channel bandwidth, it is inevitable to compress or reduce the volume of the transmission data.

The image signal can be normally compressed without seriously affecting its integrity because there usually exist certain correlationships or redundancies among some of the pixels in a single frame and also among those of neighboring frames. Accordingly, most of prior art image signal encoding methods employ various compression techniques(or coding methods) built on the idea of utilizing or truncating the redundancies.

One category of such coding methods relates to transform techniques which take advantage of the redundancies existing in a single frame. One of such transform methods is a two-dimensional Discrete Cosine Transform(DCT), which is described in Chen and Pratt, "Scene Adaptive Coder", IEEE Transactions on Communication, COM-32, No. 3(March 1984).

In such schemes as ISO/IEC MPEG standards, the DCT is employed with such other coding methods such Differential Pulse-Code Modulation(DPCM) and motion compensated predictive coding which employs a motion estimation and prediction(see MPEG Video Simulation Model Three, International Organization for Standardization, Coded Representation of Picture and Audio Information, 1990, ISO-IEC/JTC1/SC2/WG8 MPEG 90/041).

In a conventional image encoding system, each frame of image signal is first divided into blocks, each of which comprising a predetermined number, e.g., 64, of pixel data, and is processed, e.g., discrete cosine transformed, on a block-by-block basis. The image signal is subject to further processing, e.g., motion estimation and prediction. An additional signal containing, e.g., information about the encoding process, may be inserted between certain two successive blocks. Thereafter, the encoded image signal is subject to further processing such as channel coding for the transmission thereof.

In a conventional image decoding system, on the other hand, an image signal received through a transmission channel is subject to a series of decoding processes including, e.g., channel decoding, variable length decoding, run-length decoding and inverse quantization before an IDCT operation may be performed. In other words, an input signal to an IDCT apparatus is a transformed video signal provided from, e.g., an inverse quantizer included in the image decoding system. The input signal may include a data signal which contains a plurality of blocks each of which has predetermined number a of transformed data which is fed to the IDCT apparatus at a constant rate. For certain blocks, a number of time gaps of variable durations may be inserted between a corresponding number of two successive blocks, wherein each time gap corresponds to said each additional signal inserted at the encoder and its duration may depend on the system. Therefore, the data signal also includes a multiplicity of time gaps each of which is inserted between two successive blocks.

In addition to the data signal, information signals which are related to the timing of the data signal are also included in the input signal and provided to the IDCT apparatus. A common example of such signals is a block start signal which is activated during a first input cycle of each block.

As is well known, a conventional IDCT processor performs an IDCT operation on a block-by-block basis, and, therefore, may have some constraints on the format or timing of the input. Typically, the transformed data should be applied to the IDCT processor sequentially at a constant rate of one input data per one clock cycle and the time gap should satisfy certain conditions. For example, the time gap should be multiples of the number of input data in a block of clock cycles or should be greater than a latency. The latency as used herein refers to a time interval between the start of a block input and the start of its output and is defined by the characteristics of the IDCT processor.

If the input signal does not satisfy said conditions imposed by the IDCT processor, internal synchronization of the IDCT processor becomes violated and the IDCT processor cannot produce a proper result.

Accordingly, due to the constraints on the timing of an input signal, the IDCT processor of the art may become unable to deal with the time gaps of variable durations inserted between certain blocks.

Various schemes are proposed to overcome the constraints on the timing of an input signal. For example, 2 IDCT processors are used to deal with the time gaps of variable durations inserted between the blocks. However, using two IDCT processors entails an increased cost of the system.

WO88/07725 discloses a bidimensional Discrete Cosine Transform apparatus comprising a first 1-D DCT processor, an intermediate memory, a second 1-D DCT processor and a timing and conical unit. In order to control and to synchronize the operation of said apparatus with the starting of the input signal data blocks, a strobe signal is used to identify the start of each input data block.

### Summary of the Invention

It is, therefore, a primary object of the present invention to provide an IDCT apparatus which can effectively deal with the time gaps of variable durations inserted between a set of two successive blocks. The invention will be carried out according to appended independent Claim 1.

### Brief Description of the Drawings

The above and other objects and features of the present invention will become apparent from the following description of preferred embodiments given in conjunction with the accompanying drawings, in which:
Fig. 1 shows a block diagram of the IDCT apparatus of the present invention;
Fig. 2 is a detailed block diagram of the 1st 1-D IDCT block shown in Fig. 1;
Fig. 3 depicts a block diagram of the transposition memory block shown in Fig. 1;
Fig. 4 illustrates a block diagram of the transposition memory controller shown in Fig. 3; and
Fig. 5 represents exemplary waveforms of various signals used in accordance with the present invention.

### Detailed Description of the Preferred Embodiments

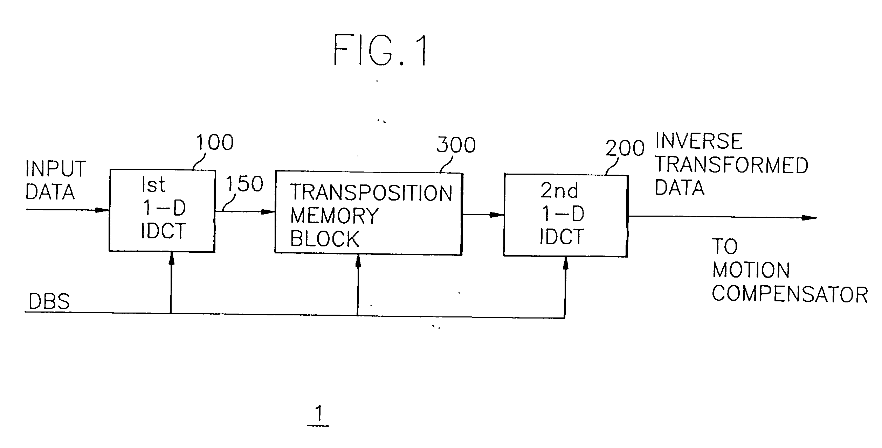

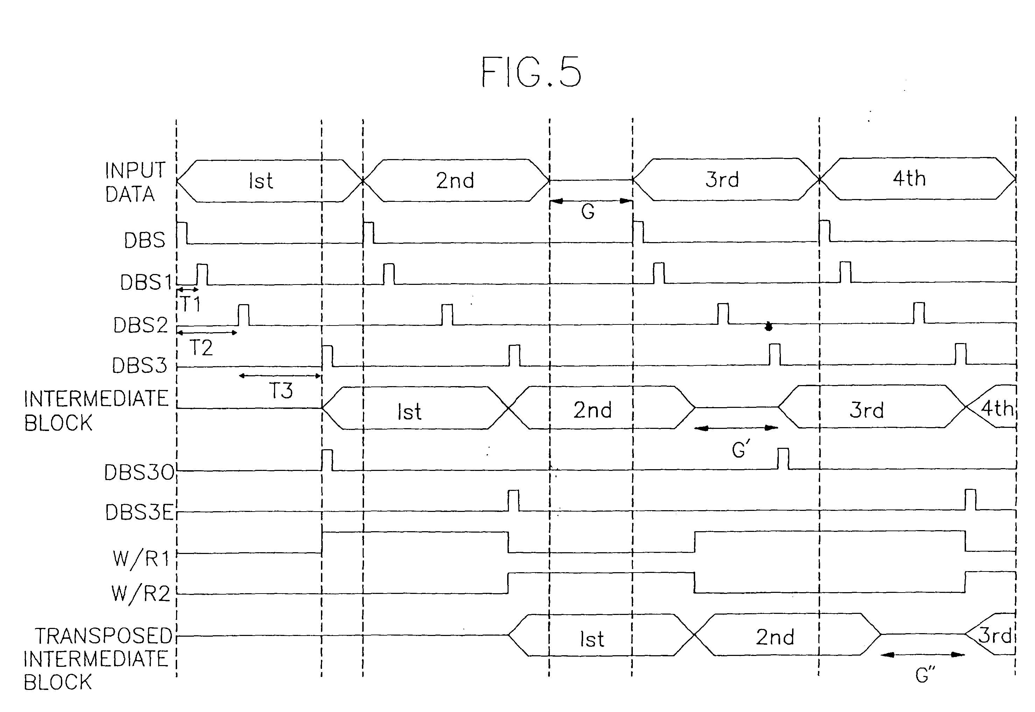

There is shown in Fig. 1 an IDCT apparatus 1 of the present invention; and various signals used in the IDCT apparatus 1 are illustrated in Fig. 5. The IDCT apparatus 1 comprises 1st 1-D (one-dimensional) IDCT means 100 for performing a 1-D IDCT operation on a block of input signal data to thereby provide an intermediate block of 1-D IDCT Transformed data, transposition memory means 300 for storing and transposing the intermediate block of 1-D IDCT Transformed data and 2nd 1-D IDCT means 200 for subjecting the transposed intermediate block of 1-D IDCT Transformed data to a second 1-D IDCT operation.

An input signal to the IDCT apparatus 1 of the present invention is of a standard type DCT transformed video signal which may be provided from another part of an image decoding system such as the inverse quantizer(not shown) and comprises input data signal and an information input signal, wherein said information input signal includes a block start signal. The input data signal represented in Figs. 1 and Fig. 5 as INPUT DATA includes a plurality of blocks of DCT transformed data and the block start signal represented as DBS denotes a start of each block included in the input data signal. Each of said blocks has a predetermined number, e.g. 64, of DCT transformed data and for some two successive blocks, a time gap of variable duration is inserted therebetween. For example, a time gap of duration G is inserted between second and third blocks in Fig. 5.

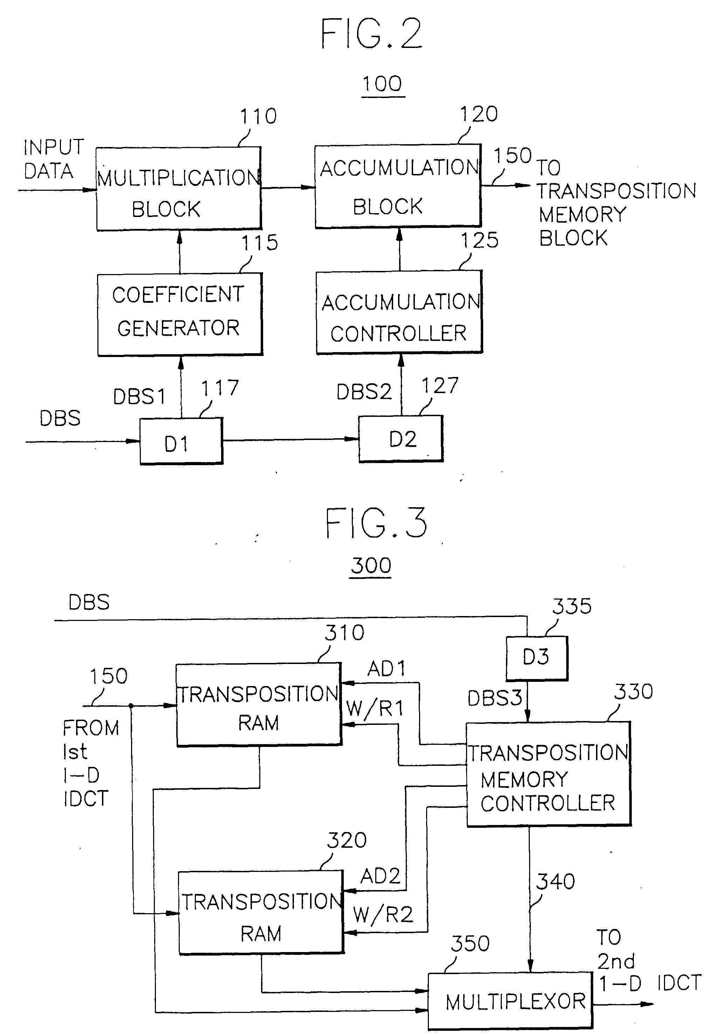

The input data signal INPUT DATA is inputted to the 1st 1-D IDCT means 100 to be 1-D inverse transformed therein. Specifically, the 1st 1-D IDCT means 100 perform the 1-D IDCT by multiplying each block of data signal INPUT DATA by a predetermined IDCT coefficients matrix thereby providing an intermediate block of I-D IDCT Transformed data as will be explained in accordance with Fig. 2.

The intermediate block of I-D IDCT Transformed data supplied by the 1st 1-D IDCT means 100 is transposed in the transposition memory means 300 to be input to the 2nd 1-D IDCT means 200.

The operation of the 2nd 1-D IDCT means 200 is substantially the same with that of the 1st 1-D IDCT means 100 except that it multiplies by the IDCT coefficients matrix the transposed intermediate block of I-D IDCT Transformed data instead of the input block of data signal INPUT DATA. That is, the transposed intermediate block of I-D IDCT Transformed data inputted from the transposition memory means 300 is 1-D inverse transformed at the 2nd 1-D IDCT means 200 to form a 2-D inverse transformed output data block. Said 2-D inverse transformed output data block is provided to another part of the decoding system such as motion compensator.

The block start signal DBS is also inputted to each means included in the IDCT apparatus 1 for controlling each of said means as will be explained hereinafter.

Referring to Fig. 2, there is a detailed block diagram of the 1st 1-D IDCT means 100 shown in Fig. 1. At the 1st 1-D IDCT means 100, a block of data signal INPUT DATA is multiplied by a predetermined IDCT coefficients matrix. For the matrix-matrix multiplication, the 1st 1-D IDCT means 100 include multiplication means 110 for multiplying each of the IDCT coefficients included in the IDCT coefficient matrix by each data included in said block of data signal INPUT DATA, accumulation means 120 for adding a predetermined number, e.g. 8, of products provided from the multiplication means 110 to form 1-D inverse transformed data included in said intermediate block of I-D IDCT Transformed data, coefficient generator means 115 for providing the IDCT coefficients used in the multiplication means 110 and accumulation controller means 125 for generating control signals used in the accumulation means 120. The 1st 1-D IDCT means 100 also includes delay means D1 117 and D2 127 for providing DBS1 and DBS2 which are block start signals delayed by predetermined intervals. DBS1 and DBS2 are used in the coefficient generator means 115 and the accumulation controller means 125, respectively, for the timing control of the multiplication means 110 and the accumulation means 120.

Referring to Fig. 5, there are shown illustrative waveforms for DBS, DBS1 and DBS2. DBS is delayed by a predetermined interval T1 and then again by T2 to form DBS1 and DBS2, respectively, wherein T1 denotes a time interval between a start of input of a data signal block and a start of coefficient input to the multiplication means 110. Therefore, the coefficient generator means 115 starts to provide IDCT coefficients to the multiplication means 110 in response to DBS1. In other words, the operation of the coefficient generator means 115 and the multiplication means 110 is controlled by DBS1.

T2 denotes a time interval between a start of coefficient input to the multiplication means 110 and a start of product output from the multiplication means 110 and input to the accumulation means 120. In response to DBS2, the contents of the accumulation means 120 is cleared and accumulation operation for the products of a new input data signal block is performed from then on. Therefore, the operation of the accumulation means 120 and the accumulation controller means 125 is controlled by DBS2. T1 and T2 are predetermined according to a system design. By the operation of the multiplication means 110 and the accumulation means 120, each of the input data signal block is 1-D inverse transformed in the 1st 1-D IDCT means 100 to form an intermediate block of I-D IDCT Transformed data and input to the transposition memory means 300 on line 150.

Referring to Fig. 3, there is a block diagram of the transposition memory means 300 shown in Fig. 1. The intermediate block of I-D IDCT Transformed data provided from the 1st 1-D IDCT means 100 is transposed in the transposition memory means 300 to be supplied to the 2nd 1-D IDCT means 200. The transposition memory means 300 include two 8x8 transposition RAMs (Random Access Memories) 310 and 320 for storing the intermediate blocks of I-D IDCT Transformed data alternately, that is two neighboring blocks of 1-D IDCT transformed data are stored in two different transposition RAMs 310 or 320, transposition memory controller means 330 for generating various control signals for the writing and read operation of the two transposition RAMs 310 and 320 and a multiplexor 350 for selecting an output from one of the two transposition RAMs and supplying it to the 2nd 1-D IDCT means 200. It also includes delay means D3 335 for producing a further control signal DBS3. As shown in Fig. 3, DBS3 is produced by delaying DBS by a predetermined time ( T1+T2+T3), wherein ( T1+T2+T3) denotes an interval between the input of an input data signal block to the 1st 1-D IDCT means 100 and the start of the output of the corresponding intermediate block of I-D IDCT Transformed data from the 1st 1-D IDCT means 100.

The intermediate blocks of I-D IDCT Transformed data provided from the 1st 1-D IDCT means 100 on the line 150 are stored in the two transposition RAMs 310 and 320, alternately. For example, if the 1st intermediate block of I-D IDCT Transformed data shown in Fig. 5 is stored in the transposition RAM 310, the 2nd intermediate block is stored in the transposition RAM 320. By storing intermediate block of I-D IDCT Transformed data in this manner, an intermediate block previously stored at one of the transposition RAMs can be provided in a transposed sequence to the 2nd 1-D IDCT means 200 while another intermediate block is being stored in the other transposition RAM.

To enable the operation explained above, various control signals, e.g., AD1, AD2, W/R1 and W/R2, are generated in the transposition memory controller means 330 in response to DBS3. AD1 and AD2 are address signals for the read and write operation of the two transposition RAMs 310 and 320 and the write/read selection signals W/R1 and W/R2 determine the operation of the transposition RAMs 310 and 320, respectively. The transposition RAMs 310 and 320 are controlled so that while one of the transposition RAMs performs the read operation the other one is doing the write operation. Using the address signals and write/read selections signals described above, intermediate blocks of I-D IDCT Transformed data which are denoted as 1-D transformed data in Fig. 5 are stored at one of the transposition RAMs and supplied to the multiplexor 350 in a transposed sequence. For example, a 1st or 3rd intermediate block is stored in the transposition RAM 310; and a 2nd or 4th intermediate block is stored in the transposition RAM 320. While the 2nd intermediate block is stored in the transposition RAM 320, the transposed 1st intermediate block is provided to the multiplexor 350. From the waveform of the intermediate block of I-D IDCT Transformed data and the transposed intermediate block of I-D IDCT Transformed data shown in Fig. 5, it can be easily seen that the transposed 2nd intermediate block is retrieved from the transposition RAM 320 as soon as it is stored therein. Therefore, when invalid data corresponding to the time gap G' and part of the 3rd intermediate block of I-D IDCT Transformed data are supplied to the transposition RAM 310, the transposed 2nd intermediate block of I-D IDCT Transformed data is retrieved from the second transposition RAM 320. On the other hand, while the remaining part of the 3rd intermediate block is stored in the transposition RAM 310, invalid data corresponding to the time gap G'' is retrieved from the transposition RAM 320 as shown in Fig. 5. The multiplexor means 350 selects transposed data of I-D IDCT Transformed data provided by the read operation of one of the transposition RAMs in response to the selection signal provided from the transposition memory controller means 330 on a line 340. The control signal W/R2 can be used as the selection signal wherein the output from the transposition RAM 310 is selected when W/R2 is active; and the output from the transposition RAM 320 is selected when W/R1 is active.

The transposed intermediate block of I-D IDCT Transformed data supplied by the multiplexor means 350 is inputted to the 2nd 1-D IDCT means 200. The input to the 2nd 1-D IDCT means also includes a time gap between 2nd and 3rd intermediate blocks as shown in Fig. 5. The 2nd IDCT means 200 performs substantially the same operation as that of the 1st 1-D IDCT means 100.

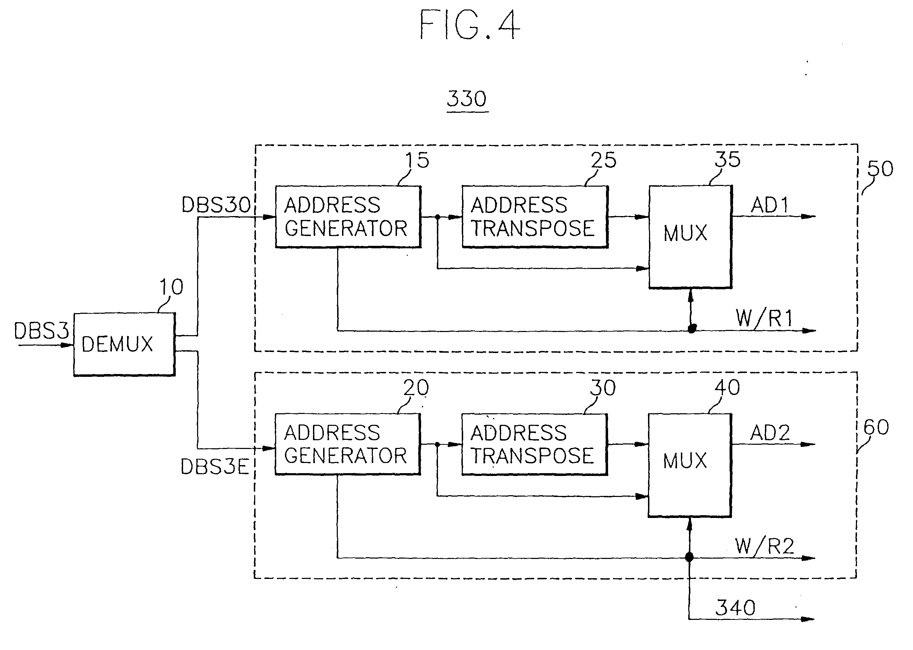

Referring to Fig. 4, there is a detailed block diagram of the transposition memory controller means 330 shown in Fig. 3.

As explained above, the transposition memory controller means 330 generates address signals AD1, AD2, write/read selection signals W/R1 and W/R2 for the two transposition RAMs 310 and 320 and the selection signal W/R2 for the multiplexor means 350. Specifically, the transposition memory controller means 330 include a demultiplexor means 10 for dividing DBS3 to DBS3O and DBS3E shown in Fig. 5 and a first and a second address generating means 50 and 60 for generating address signals AD1 and AD2 and write/read selection signals W/R1 and W/R2 for the transposition RAMs 310 and 320 in response to DBS3O and DBS3E, respectively. As can be seen in Fig. 5, DBS3O indicates the start of each odd-numbered intermediate block while DBS3E denotes the start of each even-numbered intermediate block.

The first address generating means 50 include a address generator means 15 that generate a sequence of predetermined write addresses, e.g. 0 to 63, twice for the 128 clock cycles, from the rising edge of DBS3O. The write address sequence is converted to a read address sequence in a address transpose means 25 for the retrieval of the transposed intermediate block of I-D IDCT Transformed data from the transposition RAM 310. One of the write and read address sequences is selected in a multiplexor means 35 to form the address signal AD1 and fed to the transposition RAM 310. Specifically, for 64 clock cycles from the first rising edge of DBS3O shown in Fig. 5, the write address sequence is selected and the first intermediate block of I-D IDCT Transformed data is written to the transposition RAM 310 as shown in the 6th row in Fig. 5. Thereafter, the read address sequence from the address transpose means 25 is selected for 64 clock cycles and the transposed first intermediate block of I-D IDCT Transformed data is retrieved from the transposition RAM 310 as depicted in the last row of Fig 5. To carry out the write/read operation described above, the write/read selection signal as well as the address signal is needed. Therefore, the first address generating means 50 also generates the write/read selection signal W/R1 for the transposition RAM 310. The transposition RAM 310 performs a write or a read operation when W/R1 shown in Fig. 5 is "1" or "0", respectively.

The second address generating means 60 perform the same operation as that of the first address generating means 50 except that it generates an address signal for 128 clock cycles from the rising edge of DBS3E. Specifically, in response to the first rising edge of DBS3E shown in Fig. 5, the second address generating means 60 generate a predetermined write and read address sequence for the storing and retrieving of the second intermediate block of I-D IDCT Transformed data. The second address generating means 60 also generates the write/read selection signal W/R2 for the transposition RAM 320, wherein a write or a read operation is performed when W/R2 shown in Fig. 5 is "1" or "0", respectively.

Referring back to Fig. 5, the various signals mentioned above are illustrated. As explained above, the data signal represented as INPUT DATA includes a plurality of blocks of transformed data and a time gap G is inserted between a second and a third blocks. The 1st 1-D IDCT means 100 shown in Fig. 1 performs the 1-D IDCT operation in response to DBS1 and DBS2 control signals and generate the intermediate block of I-D IDCT Transformed data shown in Fig. 5. As the input data includes a time gap G between the 2nd and the 3rd block, a time gap G' of same duration exists between the 2nd and the 3rd intermediate blocks of I-D IDCT Transformed data as shown in Fig. 5. control signals DBS3O and DBS3E denote start of odd-numbered and even-numbered intermediate blocks of I-D IDCT Transformed data, respectively. The odd-numbered and the even-numbered intermediate blocks are stored in the transposition memory means 300 shown in Fig. 1 when control signals W/R1 and W/R2 are "1", respectively. The intermediate blocks of I-D IDCT Transformed data are retrieved in a transposed sequence when the corresponding write/read selection signal W/R1 or W/R2 is "0" as shown in the last line of Fig. 5, and supplied to the 2nd 1-D IDCT means 200. It should be noted that invalid data is provided to the 2nd 1-D IDCT means 200 during the time gap denoted as G". The 2nd 1-D IDCT means 200 deals with the time gap as explained in reference to Fig. 2. As explained above, the 2nd 1-D IDCT means 200 shown in Fig. 2 perform the same operation as the 1st 1-D IDCT means 100 as explained in reference to Figs. 2 and 5 and provides 2-D inverse transformed data to other parts of the decoding system.

## Claims

1. An inverse discrete cosine transformation(IDCT) apparatus for performing a two-dimensional IDCT operation on an input signal INPUT DATA including an input data signal and an input information signal to generate an inverse transformed output data signal, wherein said input data signal includes a plurality of blocks of transformed coefficients and a multiplicity of time gaps of variable durations, each of said blocks having a multiple number of Discrete cosine transformed coefficients and each of said time gaps being inserted between two successive blocks and wherein said input information signal includes a plurality of block start signals DBS each of which indicating the start of each block, said apparatus comprising:
a first one-dimensional(1-D) IDCT means (100) for performing a 1-D IDCT operation on each of the input data signals blocks in response to each of the block start signals DBS, to thereby provide an intermediate block of I-D inverse Transformed data ;
delay means (117) and (127), comprising means to generate control signals DBS1 and DBS2 by delaying said block start signal DBS of predetermined time intervals, and means to supply said control signals DBS1 and DBS2 to said first 1-D IDCT means (100) to control the operation of said IDCT means (100);
c transposition memory means for storing said intermediate blocks of I-D IDCT Transformed data to perform a transposition operation of said block of 1-D inverse transformed data and to supply transposed intermediate blocks of I-D IDCT Transformed data in response to the block start signals DBS, wherein said transposition memory means 300 comprise:
c1 a transposition memory controller means (330) for generating a first set of control signals AD1 and W/R1 and a second set of control signals AD2 and W/R2 in response to the block start signals DBS in such a way that two neighbouring blocks of 1-D inverse transformed data are alternately stored in first memory means (310) or in second memory means (320) ;
c2 said first memory means (310) for storing odd-numbered intermediate blocks of I-D IDCT Transformed data and performing a transposition operation of said odd-numbered blocks of 1-D inverse transformed data and supplying said transposed odd-numbered intermediate blocks of I-D IDCT Transformed data in response to said first set of control signals;
c3 said second memory means (320) for storing even-numbered intermediate blocks of I-D IDCT Transformed data and performing a transposition operation of said even-numbered blocks of 1-D inverse transformed data and supplying said transposed even-numbered intermediate blocks of I-D IDCT Transformed data in response to said second set of control signals; and
c4 means for combining (350) the transposed odd-numbered and the transposed even-numbered intermediate blocks of I-D IDCT Transformed data supplied by said first and second memory means, to thereby provide transposed intermediate blocks of I-D IDCT Transformed data; and
d second 1-D IDCT means (200) operating in the same way as said first 1-D IDCT means (100), for performing a second 1-D IDCT operation on each of the transposed intermediate blocks of I-D IDCT Transformed data in response to each of the block start signals DBS, to thereby provide the inverse transformed output data.

2. The apparatus of claim 1, wherein said first set of control signals includes a first address signal AD1 including a sequence of predetermined write addresses and a sequence of predetermined read addresses wherein said sequence of read addresses is generated by transposition of said sequence of write addresses, and a first selection signal W/R1 for selecting the operation of said first memory means (310) to carry out the write and read operation to and from said first memory means (310) related to said first address signal AD1 ; and said second set of control signals AD2 including a second address signal including a sequence of predetermined write addresses and a sequence of predetermined read addresses and a second selection signal W/R2 for selecting the operation of said second memory means to carry out the write and read operation to and from said second memory means (320) related to said second address signal AD2

3. The apparatus of claim 2, wherein said transposition memory controller means (330) comprising:
means D3 for delaying each of the block start signals DBS of a predetermined time delay, wherein said time delay is equal to the time between the start of input of an input data signal block to said first 1-D IDCT means (100) and the start of output of the corresponding intermediate block of inverse 1-D IDCT transformed data from said first 1-D IDCT means (100) to thereby provide a plurality of intermediate block start signals DBS3, each indicating a start of each intermediate block;
means to perform a transposition operation of said block of 1-D inverse transformed data and to supply for dividing the intermediate block start signals DBS3 into a first group of intermediate block start signals DBS30, each indicating a start of an odd-numbered intermediate block and a second group of intermediate block start signals DBS3E, each indicating a start of an even-numbered intermediate block;
a first address generating means (50) for providing said first address signal AD1 and said first selection W/R1 signal in response to each of said intermediate block start signals DBS30 included in said first group of said intermediate block start signals; and
a second address generating means (60) for providing said second address signal AD2 and said second selection signal W/R2 in response to each of said intermediate block start signals DBS3E included in said second group of said intermediate block start signals.

## Patentansprüche

1. Vorrichtung für eine inverse diskrete Kosinus-Transformation (IDCT) zum Durchführen einer zweidimensionalen IDCT-Operation an einem Eingangssignal EINGANGSDATEN, das ein Eingangsdatensignal und ein Eingangsinformationssignal einschließt, um ein inverses transformiertes Ausgangsdatensignal zu erzeugen, wobei das Eingangsdatensignal mehrere Blöcke transformierter Koeffizienten und mehrere Zeitlücken variabler Dauer einschließt, jeder Block mehrere diskrete kosinustransformierte Koeffizienten aufweist und jede Zeitlücke zwischen zwei aufeinanderfolgenden Blöcken eingefügt ist, und wobei das Eingangsinformationssignal mehrere Blockstartsignale DBS einschließt, von denen jedes den Start jeweils eines Blockes angibt, wobei die Vorrichtung aufweist:
a) erste ein-dimensionale (1-D) IDCT-Mittel (100) zum Durchführen einer 1-D IDCT-Operation auf jedem der Eingangsdatensignalblöcke als Antwort auf jeweils eines der Blockstartsignale DBS, um dadurch einen Zwischenblock aus 1-D inversen transformierten Daten bereitzustellen;
b) Verzögerungsmittel (117) und (127), welche Mittel zum Erzeugen von Steuersignalen DBS1 und DBS2 durch Verzögern des Blockstartsignals DBS um vorgegebene Zeitintervalle und Mittel zum Bereitstellen der Steuersignale DBS1 und DBS2 an die ersten 1-D IDCT-Mittel (100) für die Steuerung der Operation der IDCT-Mittel (100) aufweist;
c) Transponierspeichermittel zum Speichern der Zwischenblöcke aus 1-D IDCT-transformierten Daten, um eine Transponieroperation des Blockes aus 1-D inversen transformierten Daten durchzuführen und transponierte Zwischenblöcke aus 1-D IDCT-transformierten Daten als Antwort auf die Blockstartsignale DBS bereitzustellen, wobei die Transponierspeichermittel (300) aufweisen:
c1) ein Transponierspeichersteuermittel (330) zum Erzeugen eines ersten Satzes an Steuersignalen AD1 und W/R1 und eines zweiten Satzes an Steuersignalen AD2 und W/R2 als Antwort auf die Blockstartsignale DBS derart, daß zwei benachbarte Blöcke aus 1-D inversen transformierten Daten abwechselnd in ersten Speichermitteln (310) oder in zweiten Speichermitteln (320) gespeichert werden;
c2) die ersten Speichermittel (310) zum Speichern ungradzahliger Zwischenblöcke aus 1-D IDCT-transformierten Daten und zum Durchführen einer Transponieroperation der ungradzahligen Blöcke aus 1-D inversen transformierten Daten und zum Bereitstellen der transponierten ungradzahligen Zwischenblöcke aus 1-D IDCT-transformierten Daten als Antwort auf den ersten Satz an Steuersignalen ausgelegt sind;
c3) die zweiten Speichermittel (320) zum Speichern gradzahliger Zwischenblöcke aus 1-D IDCT-transformierten Daten und zum Durchführen einer Transponieroperation der gradzahligen Blöcke aus 1-D inversen transformierten Daten und zum Bereitstellen der transponierten gradzahligen Zwischenblöcke aus 1-D IDCT-transformierten Daten als Antwort auf den zweiten Satz an Steuersignalen ausgelegt sind; und
c4) Mittel zum Kombinieren (350) der transponierten ungradzahligen und der transponierten gradzahligen Zwischenblöcke aus 1-D IDCT-transformierten Daten, welche von den ersten und den zweiten Speichermitteln bereitgestellt werden, um dadurch transponierte Zwischenblökke aus 1-D IDCT-transformierten Daten bereitzustellen; und
d) zweite 1-D IDCT-Mittel (200), die auf die gleiche Weise wie die ersten 1-D IDCT-Mittel (100) arbeiten, zum Durchführen einer zweiten 1-D IDCT-Operation an jedem der transponierten Zwischenblökke aus 1-D IDCT-transformierten Daten als Antwort auf jeweils eines der Blockstartsignale DBS, um dadurch die inversen transformierten Ausgangsdaten bereitzustellen.

2. Vorrichtung nach Anspruch 1, bei welcher der erste Satz an Steuersignalen ein erstes Adressensignal AD1, das eine Sequenz an vorgegebenen Schreibadressen und eine Sequenz an vorgegebenen Leseadressen einschließt, wobei die Sequenz an Leseadressen durch Transponierung der Sequenz an Schreibadressen erzeugt wird, und ein erstes Auswahlsignal W/R1 zum Auswählen der Operation des ersten Speichermittels (310) einschließt, um die Schreibund Leseoperation auf und von den ersten Speichermitteln (310) auszuführen, die auf das erste Adressensignal AD1 bezogen ist; und der zweite Satz an Steuersignalen AD2 ein zweites Adressensignal, das eine Sequenz an vorgegebenen Schreibadressen und eine Sequenz an vorgegebenen Leseadressen einschließt, und ein zweites Auswahlsignal W/R2 zum Auswählen der Operation des zweiten Speichermittels einschließt, um die Schreib- und Leseoperation auf und von den zweiten Speichermitteln (320) auszuführen, die auf das zweite Adressensignal AD2 bezogen ist.

3. Vorrichtung nach Anspruch 2, bei welcher die Transponierspeichersteuermittel (330) aufweisen:
Mittel D3 zum Verzögern jedes der Blockstartsignale DBS um eine vorgegebene Zeitverzögerung, wobei die Zeitverzögerung gleich der Zeit zwischen dem Start einer Eingabe eines Eingangsdatensignalblockes an die ersten 1-D IDCT-Mittel (100) und dem Start der Ausgabe des entsprechenden Zwischenblockes aus inversen 1-D IDCT-transformierten Daten aus den ersten 1-D IDCT-Mitteln (100) ist, um dadurch mehrere Zwischenblockstartsignale DBS3 bereitzustellen, von denen jedes einen Start jeweils eines der Zwischenblöcke angibt;
Mittel (10) zum Aufteilen der Zwischenblockstartsignale DBS3 in eine erste Gruppe aus Zwischenblockstartsignalen DBS30, von denen jedes einen Start eines ungradzahligen Zwischenblockes angibt, und eine zweite Gruppe aus Zwischenblockstartsignalen DBS3E, von denen jedes einen Start eines gradzahligen Zwischenblockes angibt;
ein erstes Adressenerzeugungsmittel (50) zum Bereitstellen des ersten Adressensignals AD1 und des ersten Auswahlsignals W/R1 als Antwort auf jeweils eines der Zwischenblockstartsignale DBS30, die in der ersten Gruppe der Zwischenblockstartsignale enthalten sind; und ein zweites Adressenerzeugungsmittel (60) zum Bereitstellen des zweiten Adressensignals AD2 und des zweiten Auswahlsignals W/R2 als Antwort auf jeweils eines der Zwischenblockstartsignale DBS3E, die in der zweiten Gruppe der Zwischenblockstartsignale enthalten sind.

## Revendications

1. Dispositif de transformation inverse en cosinus discret (IDCT), destiné à effectuer une opération IDCT bidimensionnelle sur un signal d'entrée INPUT DATA comportant un signal de données d'entrée et un signal d'informations d'entrée pour générer un signal de données de sortie transformé en inverse, dans lequel ledit signal de données d'entrée comporte une pluralité de blocs de coefficients transformés et une multiplicité de fenêtres temporelles de durées variables, chacun desdits blocs ayant un nombre multiple de coefficients transformés en cosinus discret et chacune desdites fenêtres temporelles étant insérée entre deux blocs successifs et dans lequel ledit signal d'informations d'entrée comporte une pluralité de signaux de début de bloc DBS, chacun d'entre eux indiquant le début de chaque bloc, ledit dispositif comprenant :
a des premiers moyens d'IDCT unidimensionnelle (1-D) (100), pour effectuer une opération d'IDCT 1-D sur chacun des blocs de signaux de données d'entrée, en réponse à chacun des signaux de début de bloc DBS, pour fournir ainsi un bloc intermédiaire de données transformées en inverse 1-D ;
b des moyens de retard (117) et (127), comprenant des moyens pour générer des signaux de contrôle DBS1 et DBS2 en retardant ledit signal de début de bloc DBS d'intervalles de temps prédéterminés et des moyens pour délivrer lesdits signaux de contrôle DBS1 et DBS2 auxdits premiers moyens d'IDCT 1-D (100) pour contrôler le fonctionnement desdits moyens d'IDCT (100) ;
c des moyens formant mémoire de transposition, pour stocker lesdits blocs intermédiaires de données transformées IDCT 1-D pour effectuer une opération de transposition dudit bloc de données transformées 1-D en inverse et pour délivrer des blocs intermédiaires transposés de données transformées IDCT 1-D en réponse aux signaux de début de bloc DBS, dans lequel lesdits moyens formant mémoire de transposition 300 comprennent :
c1 des moyens formant contrôleur de mémoire de transposition (330), pour générer un premier ensemble de signaux de contrôle AD1 et W/R1 et un deuxième ensemble de signaux de contrôle AD2 et W/R2 en réponse aux signaux de début de bloc DBS d'une manière telle que deux blocs voisins de données transformées 1-D en inverse soient stockés alternativement dans des premiers moyens formant mémoire (310) ou dans des deuxièmes moyens formant mémoire (320) ;
c2 lesdits premiers moyens formant mémoire (310) pour stocker des blocs intermédiaires de numéros impairs de données transformées IDCT 1-D et effectuer une opération de transposition desdits blocs de numéros impairs de données transformées 1-D en inverse et délivrer lesdits blocs intermédiaires transposés de numéros impairs de données transformées IDCT 1-D en réponse audit premier ensemble de signaux de contrôle ;
c3 lesdits deuxièmes moyens formant mémoire (320) pour stocker des blocs intermédiaires de numéros pairs de données transformées IDCT 1-D et effectuer une opération de transposition desdits blocs de numéros pairs de données transformées 1-D en inverse et délivrer lesdits blocs intermédiaires transposés de numéros pairs de données transformées IDCT 1-D en réponse audit deuxième ensemble de signaux de contrôle ; et
c4 des moyens pour associer (350) les blocs intermédiaires transposés de numéros impairs et transposés de numéros pairs de données transformées IDCT 1-D délivrés par lesdits premiers et deuxièmes moyens formant mémoire, pour fournir ainsi des blocs intermédiaires transposés de données transformées IDCT 1-D ; et
d des deuxièmes moyens d'IDCT 1-D (200) fonctionnant de la même manière que lesdits premiers moyens d'IDCT 1-D (100), pour effectuer une deuxième opération d'IDCT 1-D sur chacun des blocs intermédiaires transposés de données transformées IDCT 1-D, en réponse à chacun des signaux de début de bloc DBS, pour fournir ainsi les données de sortie transformées en inverse.

2. Dispositif selon la revendication 1, dans lequel le premier ensemble de signaux de contrôle comporte un premier signal d'adresse AD1, comportant une séquence d'adresses d'écriture prédéterminées et une séquence d'adresses de lecture prédéterminées, dans lequel ladite séquence d'adresses de lecture est générée par transposition de ladite séquence d'adresses d'écriture et un premier signal de sélection W/R1 pour sélectionner le fonctionnement desdits premiers moyens formant mémoire (310) pour effectuer l'opération d'écriture et de lecture vers et depuis lesdits premiers moyens formant mémoire (310) liées audit premier signal d'adresse AD1 ; et ledit deuxième ensemble de signaux de contrôle AD2 comportant un deuxième signal d'adresse comportant une séquence d'adresses d'écriture prédéterminées et une séquence d'adresses de lecture prédéterminées et un deuxième signal de sélection W/R2 pour sélectionner le fonctionnement desdits deuxièmes moyens formant mémoire pour effectuer l'opération d'écriture et de lecture vers et depuis lesdits deuxièmes moyens formant mémoire (320) liées audit deuxième signal d'adresse AD2.

3. Dispositif selon la revendication 2, dans lequel lesdits moyens formant contrôleur de mémoire de transposition (330) comprennent :
des moyens D3 pour retarder chacun des signaux de début de bloc DBS d'un retard prédéterminé, dans lequel ledit retard est égal au temps entre le début de l'entrée d'un bloc de signaux de données d'entrée vers lesdits premiers moyens d'IDCT 1-D (100) et le début de la sortie du bloc de données intermédiaire correspondant de données transformées IDCT 1-D en inverse provenant desdits premiers moyens d'IDCT 1-D (100), pour délivrer ainsi une pluralité de signaux de début de blocs intermédiaires DBS3, indiquant chacun un début de chaque bloc intermédiaire ;
des moyens 10 pour diviser les signaux de début de blocs intermédiaires DBS3 en un premier groupe de signaux de début de blocs intermédiaires DBS30, indiquant chacun un début d'un bloc intermédiaire de numéro impair et un deuxième groupe de signaux de début de blocs intermédiaires DBS3E, indiquant chacun un début d'un bloc intermédiaire de numéro pair ;
des premiers moyens de génération d'adresse (50), pour fournir ledit premier signal d'adresse AD1 et ledit premier signal de sélection W/R1 en réponse à chacun desdits signaux de début de blocs intermédiaires DBS30 inclus dans ledit premier groupe desdits signaux de début de blocs intermédiaires ; et
des deuxièmes moyens de génération d'adresse (60), pour fournir ledit deuxième signal d'adresse AD2 et ledit deuxième signal de sélection W/R2 en réponse à chacun desdits signaux de début de blocs intermédiaires DBS3E inclus dans ledit deuxième groupe desdits signaux de début de blocs intermédiaires.
